(19) **Europäisches Patentamt**
**European Patent Office**
**Office européen des brevets**

(11) **EP 4 142 389 A1**

(12) **EUROPEAN PATENT APPLICATION**
published in accordance with Art. 153(4) EPC

(43) Date of publication:
**01.03.2023 Bulletin 2023/09**

(21) Application number: **20932221.3**

(22) Date of filing: **22.04.2020**

(51) International Patent Classification (IPC):
***H04W 72/04*** *(2009.01)*

(52) Cooperative Patent Classification (CPC):
**H04W 72/04**

(86) International application number:
**PCT/JP2020/017408**

(87) International publication number:
**WO 2021/214921 (28.10.2021 Gazette 2021/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.**
**Chiyoda-Ku**
**Tokyo 100-6150 (JP)**

(72) Inventors:
• **SHIBAIKE Naoya**
**Tokyo 100-6150 (JP)**

• **HARADA Hiroki**
**Tokyo 100-6150 (JP)**
• **NAGATA Satoshi**
**Tokyo 100-6150 (JP)**
• **WANG Xin**
**Beijing 100190 (CN)**
• **WANG Jing**
**Beijing 100190 (CN)**
• **ZHANG Xiaohong**
**Beijing 100190 (CN)**
• **HOU Xiaolin**
**Beijing 100190 (CN)**

(74) Representative: **Hoffmann Eitle**
**Patent- und Rechtsanwälte PartmbB**
**Arabellastraße 30**
**81925 München (DE)**

(54) **TERMINAL**

(57)     A terminal includes: a control unit configured to control predetermined communication, which uses a same antenna port, for transmitting two or more transport blocks by using frequency division multiplexing; and a reception unit configured to receive downlink control information used for the predetermined communication, wherein the control unit controls the predetermined communication based on the downlink control information.

FIG.4

**Description**

Technical Field

The present disclosure relates to a terminal that performs radio communications, and particularly relates to a terminal that performs communication for transmitting transport blocks.

Background Art

The 3rd Generation Partnership Project (3GPP) has drafted the specifications of the 5th generation mobile communication system (5G, also known as New Radio (NR) or Next Generation (NG)), and is further drafting the next generation standard known as Beyond 5G, 5G Evolution, or 6G.

In 3GPP Release 15 and Release 16 (NR), the specifications of operations in a plurality of frequency ranges are drafted. Specifically, the frequency ranges include bands such as FR1 (410 MHz to 7.125 GHz) and FR2 (24.25 GHz to 52.6 GHz).

Furthermore, NR supporting frequencies exceeding 52.6 GHz and reaching up to 71 GHz is under study (Non Patent Literature 1). Beyond 5G, 5G Evolution, or 6G (Release 18 or later versions) are further expected to support frequency bands above 71 GHz.

Citation List

Non Patent Literature

Non Patent Literature 1: "New WID on Extending current NR operation to 71 GHz", RP-193229, 3GPP TSG RAN Meeting #86, 3GPP, December 2019

Summary of Invention

When a frequency band different from FR1 and FR2, such as a high frequency band exceeding 52.6 GHz is used, a larger (wider) subcarrier spacing (SCS) is expected to be used for purposes such as supporting stable radio communications during high speed movement of a terminal (User Equipment, UE).

Such a large SCS may result in a channel bandwidth used for transmitting a single Transport Block (TB) being smaller than a channel coherent bandwidth with flat frequency response. Thus, reception characteristics of a single TB might be degraded.

Thus, the following disclosure has been made in view of the above, and an object thereof is to provide a terminal that may suppress the degradation of the TB reception characteristics.

An aspect of the present disclosure is a terminal including: a control unit configured to control predetermined communication, which uses a same antenna port, for transmitting two or more transport blocks by using frequency division multiplexing; and

a reception unit configured to receive downlink control information used for the predetermined communication. The control unit controls the predetermined communication based on the downlink control information.

Brief Description of Drawings

FIG. 1 is a diagram illustrating an overall schematic configuration of a radio communication system 10.
FIG. 2 is a diagram illustrating frequency ranges used in the radio communication system 10.
FIG. 3 is a diagram illustrating an example of a configuration of a radio frame, a subframe, and a slot used in the radio communication system 10.
FIG. 4 is a diagram illustrating a functional block configuration of a UE 200.
FIG. 5 is a diagram illustrating predetermined communication.
FIG. 6 is a diagram illustrating predetermined communication.
FIG. 7 is a diagram illustrating DCI configuration example 1.
FIG. 8 is a diagram illustrating predetermined communication.
FIG. 9 is a diagram illustrating DCI configuration example 2.
FIG. 10 is a diagram illustrating an operation example.
FIG. 11 is a diagram illustrating an example of DCI interpretation according to a first modification.
FIG. 12 is a diagram illustrating an operation example according to the first modification.
FIG. 13 is a diagram illustrating an example of a hardware configuration of the UE 200.

Description of Embodiments

Embodiments will be described below with reference to the drawings. The same functions and configurations are denoted by the same or similar reference numerals, and description thereof will be omitted as appropriate.

[Embodiment]

(1) Overall schematic configuration of radio communication system

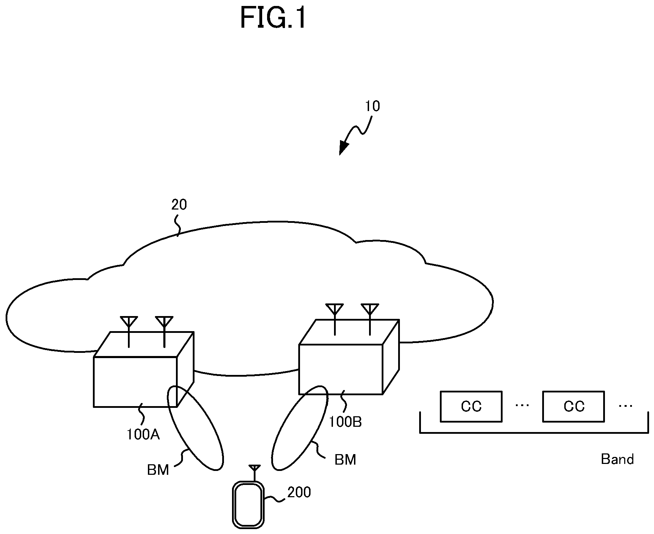

FIG. 1 is a diagram illustrating an overall schematic configuration of a radio communication system 10 according to an embodiment. The radio communication system 10 is a radio communication system compatible with 5G New Radio (NR), and includes a Next Generation-Radio Access Network 20 (hereinafter, NG-RAN 20) and a terminal 200 (hereinafter, UE 200).

The radio communication system 10 may be a radio communication system compatible with a system known as Beyond 5G, 5G Evolution or 6G.

The NG-RAN 20 includes a radio base station 100A (hereinafter, a gNB 100A) and a radio base station 100B (hereinafter, a gNB 100B). Note that the specific configuration of the radio communication system 10, including the number of gNBs and the number of and UEs, is not limited to the example illustrated in FIG. 1.

The NG-RAN 20 actually includes a plurality of NG-RAN Nodes, specifically, gNBs (or ng-eNBs), and is connected to a core network compatible with 5G (5GC, not illustrated). Note that the NG-RAN 20 and 5GC may be simply referred to as "network".

The gNB 100A and the gNB 100B are radio base stations compatible with 5G, and perform 5G radio communications with the UE 200. With radio signals transmitted from a plurality of antenna elements controlled, the gNB 100A, the gNB 100B, and the UE 200 may support Massive Multiple-Input Multiple-Output (MIMO) of generating a beam BM with a higher directivity, carrier aggregation (CA) of aggregating and using a plurality component carriers (CCs), dual connectivity (DC) enabling communications for concurrently transmitting two or more transport blocks between the UE and the two NG-RAN Nodes, and the like.

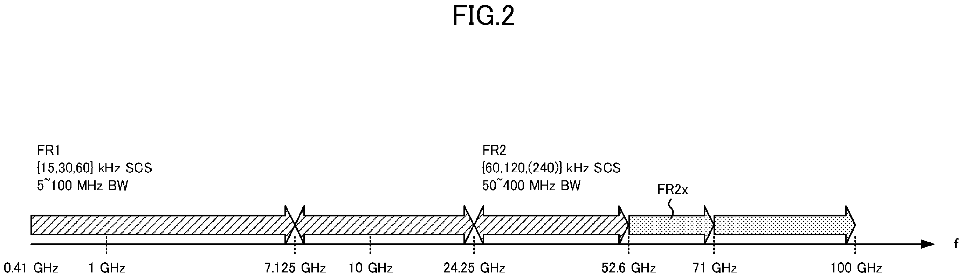

Furthermore, the radio communication system 10 supports a plurality of frequency ranges (FR). FIG. 2 illustrates frequency ranges used in the radio communication system 10.

As illustrated in FIG. 2, the radio communication system 10 supports FR1 and FR2. The frequency band of each FR is as follows.

- FR1: 410 MHz to 7.125 GHz

- FR2: 24.25 GHz to 52.6 GHz

For FR1, Sub-Carrier Spacing (SCS) of 15, 30 or 60 kHz, and a bandwidth (BW) of 5 to 100 MHz may be used. For FR2 which is a range of frequencies higher than FR1, an SCS of 60 or 120 kHz (may include 240 kHz) and a bandwidth (BW) of 50 to 400 MHz may be used.

Note that SCS may be interpreted as numerology. The numerology is defined in 3GPP TS38.300 and corresponds to one subcarrier spacing in a frequency domain.

Furthermore, the radio communication system 10 also supports a frequency band higher than FR2. Specifically, the radio communication system 10 supports a frequency band exceeding 52.6 GHz and reaching up to 114.25 GHz. For convenience sake, such a high frequency band may be referred to as "FR2x".

When a band exceeding 52.6 GHz is used to solve the problem described above, Cyclic Prefix-Orthogonal Frequency Division Multiplexing (CP-OFDM)/Discrete Fourier Transform - Spread (DFT-S-OFDM) with a larger SCS may be employed.

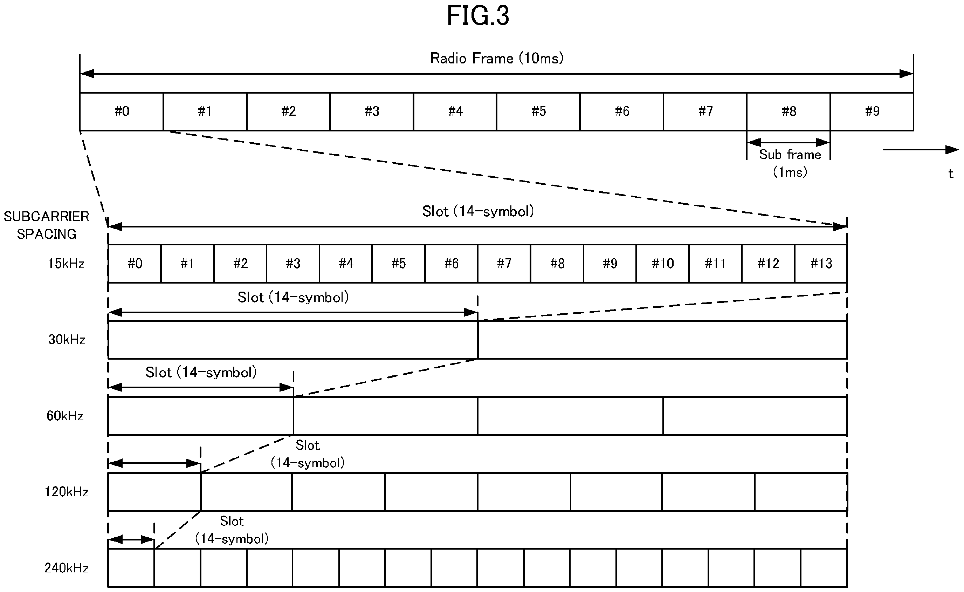

FIG. 3 illustrates an example of a configuration of a radio frame, a subframe, and a slot used in the radio communication system 10.

As illustrated in FIG. 3, one slot includes 14 symbols, and a symbol period (as well as a slot period) decreases as the SCS increases (widens). The SCS is not limited to the spaces (frequency) illustrated in FIG. 3. For example, the SCS may be 480 kHz, 960 kHz, or the like.

The number of symbols in one slot does not necessarily have to be 14 symbols (the number may be 28 or 56). Further, the number of slots per subframe may vary depending on the SCS.

A time direction (t) illustrated in FIG. 3 may also be referred to as a time domain, a symbol period, a symbol time, or the like. Further, a frequency direction may also be referred to as a frequency domain, a resource block, a subcarrier, a bandwidth part (BWP), or the like.

A DMRS is one type of reference signal and is prepared for various channels. Here, the DMRS may be regarded as a DMRS for a downlink data channel, a Physical Downlink Shared Channel (PDSCH) in particular unless otherwise specified. Note that a DMRS for an uplink data channel, a Physical Uplink Shared Channel (PUSCH) in particular may be regarded as being similar to the DMRS for the PDSCH.

The DMRS may be used for channel estimation as a part of coherent demodulation, in a device, for example, the UE 200. The DMRS may be included only in a resource block (RB) used for PDSCH transmission.

There may be a plurality of mapping types for a DMRS. Specifically, mapping type A and mapping type B may be used for a DMRS. According to the mapping type A, the first DMRS is mapped to the second or the third symbol of the slot. With the mapping type A, the DMRS may be mapped based on slot boundaries regardless of where in the slot the actual data transmission begins. It can be regarded that the first DMRS is mapped to the second or the third symbol of the slot to follow control resource sets (CORESET).

With the mapping type B, the first DMRS may be mapped to the first symbol of the data allocation. This means that the DMRS may be relatively positioned with respect to a location where data is arranged instead of being positioned based on the slot boundary.

The DMRS may include a plurality of types. Specifically, the DMRS includes Type 1 and Type 2. Type 1 and Type 2 are different from each other in the mapping in the frequency domain and the maximum number of orthogonal reference signals. Type 1 can output up to four orthogonal signals with a single-symbol DMRS, and Type 2 can output up to eight orthogonal signals with a double-symbol DMRS.

(2) Functional block configuration of radio communication system

Next, a functional block configuration of the radio communication system 10 will be described. Specifically, a functional block configuration of the UE 200 will be described.

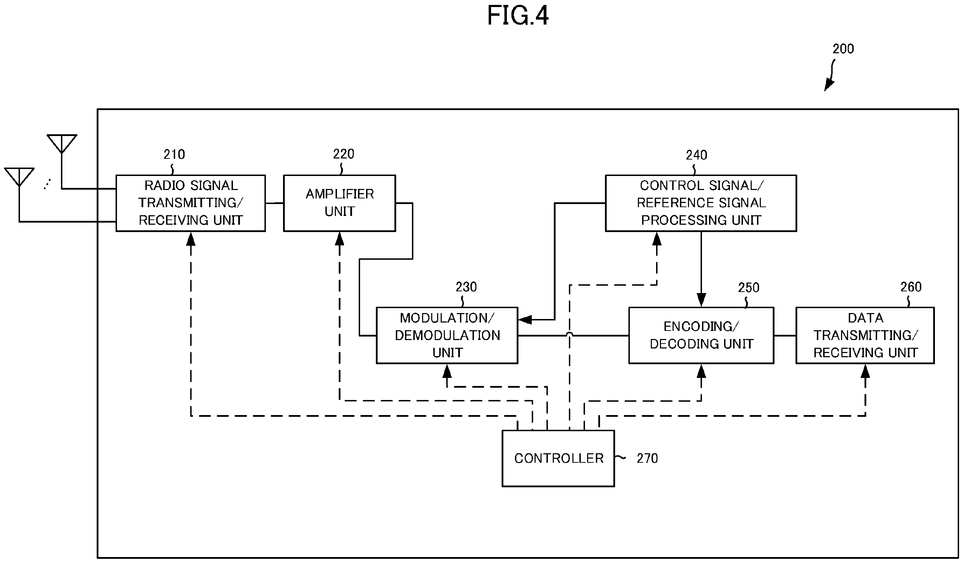

FIG. 4 is a diagram illustrating a functional block configuration of the UE 200. As illustrated in FIG. 4, the UE 200 includes a radio signal transmission/reception unit 210, an amplifier unit 220, a modulation/demodulation unit 230, a control signal/reference signal processing unit 240, a coding/decoding unit 250, a data transmission/reception unit 260, and a control unit 270.

The radio signal transmission/reception unit 210 transmits/receives a radio signal according to NR. The radio signal transmission/reception unit 210 supports Massive MIMO, CA with which a plurality of CCs are aggregated and used, DC enabling the UE to concurrently communicate with two NG-RAN Nodes, and the like.

The amplifier unit 220 includes a power amplifier (PA)/low noise amplifier (LNA) and the like. The amplifier unit 220 amplifies the signal output from the modulation/demodulation unit 230 to a predetermined power level. Furthermore, the amplifier unit 220 amplifies the RF signal output from the radio signal transmission/reception unit 210.

The modulation/demodulation unit 230 executes data modulation/demodulation, transmission power setting, resource block allocation, and the like for each predetermined communication destination (the gNB 100 or another gNB). The modulation/demodulation unit 230 may apply Cyclic Prefix-Orthogonal Frequency Division Multiplexing (CP-OFDM)/Discrete Fourier Transform-Spread (DFT-S-OFDM). DFT-S-OFDM may be applied not only for the uplink (UL) but also for the downlink (DL).

The control signal/reference signal processing unit 240 executes processing related to various control signals transmitted and received by the UE 200 and processing related to various reference signals transmitted and received by the UE 200.

Specifically, the control signal/reference signal processing unit 240 receives various control signals transmitted from the gNB 100 via a predetermined control channel, an example of which includes a control signal of the radio resource control layer (RRC). The control signal/reference signal processing unit 240 also transmits various control signals to the gNB 100 via a predetermined control channel.

The control signal/reference signal processing unit 240 executes processing using a reference signal (RS) such as a demodulation reference signal (DMRS) and a phase tracking reference signal (PTRS).

The DMRS is a reference signal (pilot signal) known between a terminal and a terminal-specific base station, and is used for estimating a fading channel used for data demodulation. The PTRS is a terminal-specific reference signal used for estimating phase noise, which becomes a problem in high frequency bands.

The reference signals may include Channel State Information-Reference Signal (CSI-RS), Sounding Reference Signal (SRS), and Positioning Reference Signal (PRS) for position information, in addition to the DMRS and the PTRS.

Furthermore, the channel includes a control channel and a data channel. The control channel includes a Physical Downlink Control Channel (PDCCH), a Physical Uplink Control Channel (PUCCH), a Random Access Channel (RACH), Downlink Control Information (DCI) including a Random Access Radio Network Temporary Identifier (RA-RNTI)), a Physical Broadcast Channel (PBCH), and the like.

The data channel includes a Physical Downlink Shared Channel (PDSCH), a Physical Uplink Shared Channel (PUSCH), and the like. Data may mean data transmitted over a data channel. The data channel may be interpreted as a shared channel.

The control signal/reference signal processing unit 240 receives downlink control information (DCI). The DCI includes, as existing fields, fields for storing DCI Formats, Carrier indicator (CI), BWP indicator, Frequency Domain Resource Allocation (FDRA), Time Domain Resource Allocation (TDRA), Modulation and Coding Scheme (MCS), HARQ Process Number (HPN), New Data Indicator (NDI), Redundancy Version (RV), and the like.

The value stored in the DCI Format field is an information element that designates the DCI format. The value stored in the CI field is an information element that designates the CC to which the DCI is applied. The value stored in the BWP indicator field is an information element that designates the BWP to which the DCI is applied. The BWP that can be designated by the BWP indicator is set by the information element (BandwidtPart-Config) included in an RRC message. The value stored in the FDRA field is an information element that designates the frequency domain resource to which the DCI is applied. The frequency domain resource is identified by the value stored in the FDRA field and the information element (RA Type) included in the RRC message. The value stored in the TDRA field is an information element that designates the time domain resource to which the DCI is applied. The time domain resource is identified by the value stored in the TDRA field and an information element (pdsch-TimeDomainAllocationList) included in an RRC message. The time domain resource may be identified by the value stored in the TDRA field and a default table. The value stored in the MCS field is an information element that designates the MCS to which the DCI is applied. The MCS is identified by the value stored in the MCS and an MCS table. The MCS table may be designated by the RRC message and may be identified by RNTI scrambling. The value stored in the HPN field is an information element that designates HARQ Process to which the DCI is applied. The value stored in the NDI is an information element for identifying whether data to which the DCI is applied is initial transmission data. The value stored in the RV field is an information element that designates redundancy of data to which the DCI is applied.

In the embodiment, the control signal/reference signal processing unit 240 forms a reception unit that receives DCI used for predetermined communication. The predetermined communication is communication for transmitting two or more transport blocks by using frequency division multiplexing, the communication using the same antenna port.

The coding/decoding unit 250 executes data division/combination, channel coding/decoding, and the like for each predetermined communication destination (the gNB 100 or another gNB).

Specifically, the coding/decoding unit 250 divides the data output from data transmission/reception unit 260 into data pieces of a predetermined size, and executes channel coding on the divided data pieces. Furthermore, the coding/decoding unit 250 decodes the data output from the modulation/demodulation unit 230 and combines pieces of the decoded data.

The data transmission/reception unit 260 transmits and receives a Protocol Data Unit (PDU) and a Service Data Unit (SDU). Specifically, the data transmission/reception unit 260 performs assembling/disassembling of PDU/SDU in a plurality of layers (such as a media access control (MAC) layer, a radio link control (RLC) layer, and a packet data convergence protocol (PDCP) layer), and the like. The data transmission/reception unit 260 executes data error correction and retransmission control based on Hybrid automatic repeat request (ARQ).

The control unit 270 controls each functional block of the UE 200. In particular, in the embodiment, the control unit 270 controls the above-described predetermined communication. Specifically, the control unit 270 controls the predetermined communication based on the DCI used for the predetermined communication.

(3) Predetermined communication

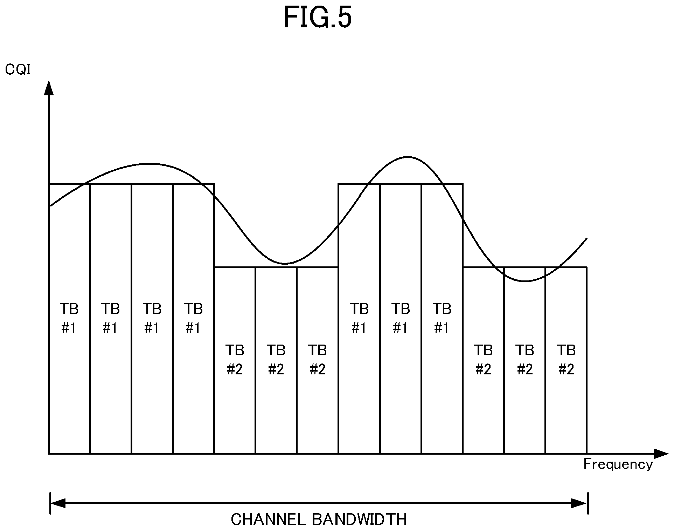

FIG. 5 is a diagram illustrating predetermined communication according to the embodiment. As described above, the predetermined communication is predetermined communication using the same antenna port and are communications for transmitting two or more transport blocks using frequency division multiplexing. In other words, the predetermined communication is communication to which Large Scheduling Granularity (LSG) is applied, and is communication for transmitting two or more transport blocks in an LSG channel bandwidth.

As illustrated in FIG. 5, the channel bandwidth is assumed to be larger (wider) than the channel coherent bandwidth, and thus the Channel Quality Indicator (CQI) may vary within the channel bandwidth. In the embodiment, an example of a case where two transport blocks (TB#1 and TB#2) are transmitted in the channel bandwidth is described. TB#1 is an example of a first transport block, and TB#2 is an example of a second transport block. For example, TB#1 having a relatively high MCS may be transmitted at a frequency with a relatively high CQI, and TB#2 having a relatively low MCS may be transmitted at a frequency with a relatively low CQI.

(3.1) DCI configuration example 1

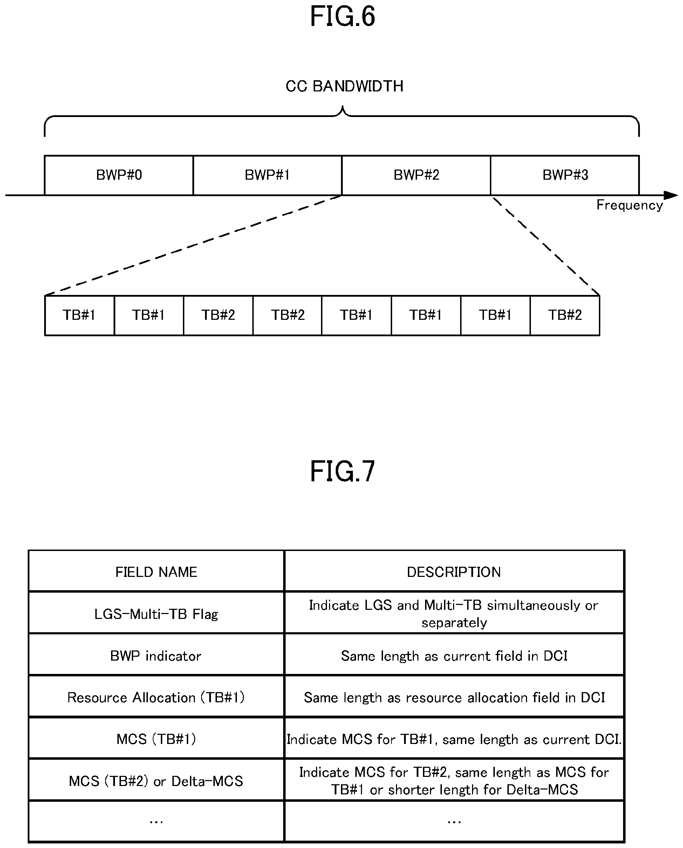

FIG. 6 illustrates a case where TB#1 and TB#2 are scheduled in a channel bandwidth BWP#2 used for the predetermined communication. Here, a case will be described where the UE 200 receives one DCI that is common to two TBs (TB#1 and TB#2) as the DCI used for the predetermined communication. In such a case, the DCI used for the predetermined communication may include the fields illustrated in FIG. 7.

As illustrated in FIG. 7, the DCI may include LGS-Multi-TB Flag, BWP Indicator, Resource Allocation (TB#1), and MCS (TB#1). Furthermore, the DCI may include MCS (TB#2) or Delta-MCS. The DCI may include other existing information elements (such as HPN, NDI, or RV).

The LGS-Multi-TB Flag is an example of an information element indicating whether predetermined communication is applied. For example, the LGS-Multi-TB Flag may be a 2-bit flag that separately indicates whether LGS is applied and whether Multi-TB is applied. The LGS-Multi-TB Flag may be a 1-bit flag that collectively indicates whether LGS and Multi-TB are applied.

The BWP Indicator is an example of an information element indicating the channel bandwidth used in the predetermined communication. Thus, the BWP Indicator may be an indicator indicating the BWP to which the predetermined communication is applied. An existing BWP Indicator can be used as the BWP Indicator, and the field length of the BWP Indicator may be the same as the field length of the existing BWP Indicator.

The Resource Allocation (TB#1) is an information element (for example, FRDA described above) that designates a resource used for scheduling TB#1. An existing Resource Allocation can be used as the Resource Allocation (TB#1), and the field length of the Resource Allocation (TB#1) may be the same as the existing Resource Allocation. In the BWP designated by the BWP Indicator, the remaining resources other than the resource designated by the Resource Allocation (TB#1) may be regarded as being used for scheduling TB#2.

The MCS (TB#1) is an information element that designates the MCS of TB#1. An existing MCS can be used as the MCS (TB#1), and the field length of the MCS (TB#1) may be the same as the field length of the existing MCS.

The MCS (TB#2) is an example of an information element used for TB#2, which is a transport block other than TB#1, and is an information element that designates the MCS of TB#2. The MCS (TB#2) is an information element newly added to the existing DCI. The field length of the MCS (TB#2) may be the same as the field length of the existing MCS.

The Delta-MCS is represented by a relative difference from the MCS (TB#1), and is an information element for identifying the MCS of TB#2. The Delta-MCS is an information element newly added to the existing DCI. The Delta-MCS may be an information element that designates the number of MCS levels to be lowered for the MCS (TB#1), or an information element that designates the number of MCS levels to be raised for the MCS (TB#1). The field length of the Delta-MCS may be shorter than the field length of the existing MCS.

(3.2) DCI configuration example 2

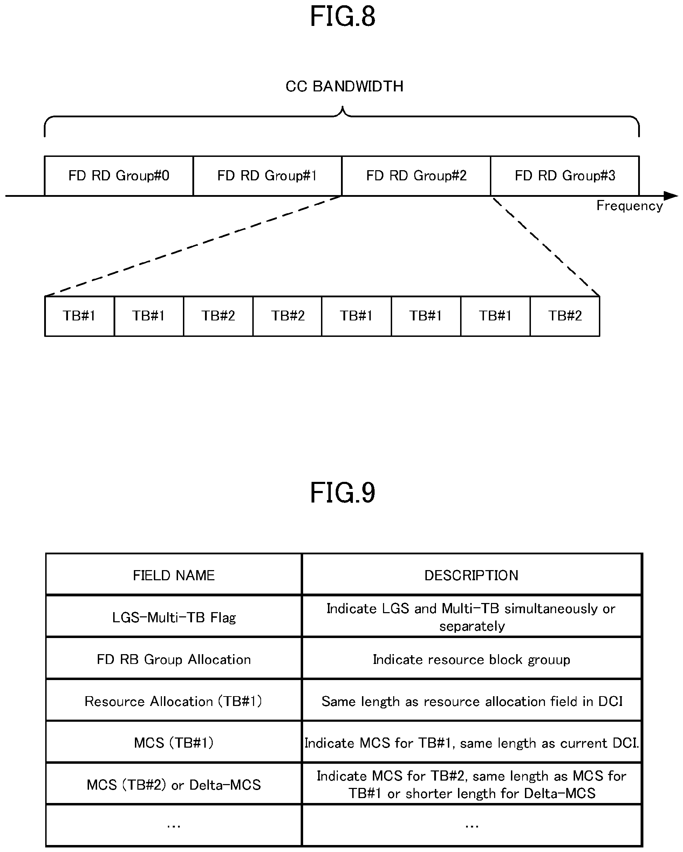

FIG. 8 illustrates a case where TB#1 and TB#2 are scheduled in a channel bandwidth FD RB Group#2 used for the predetermined communication. Here, a case will be described where the UE 200 receives one DCI that is common to two TBs (TB#1 and TB#2) as the DCI used for the predetermined communication. In such a case, the DCI used for the predetermined communication may include the fields illustrated in FIG. 9.

This FD RB Group is a concept newly defined for the above-described predetermined communication, and is an information element that designates a Resource Block (RB) used for scheduling two TBs in the frequency domain. For example, the FD RB Group can be represented as follows:

[Formula 1]

$$\left\lceil log_2 \left( N_{RB\ Group}^{FD} \right) \right\rceil$$

In DCI configuration example 2, the FD RB Group is used instead of the BWP described above.

As illustrated in FIG. 9, the DCI may include LGS-Multi-TB Flag, FD RB Group Indicator, Resource Allocation (TB#1), and MCS (TB#1). Furthermore, the DCI may include MCS (TB#2) or Delta-MCS. The DCI may include other existing information elements (such as HPN, NDI, or RV). The information elements other than the FD RB Group Indicator are the same as those in FIG. 7 described above, and thus description thereof will be omitted.

The FD RB Group Indicator is an example of an information element indicating a channel bandwidth used in the predetermined communication. Thus, the FD RB Group Indicator may be an indicator indicating the FD RB Group to which the predetermined communication is applied. In the FD RB Group designated by the FD RB Group Indicator, the remaining resources other than the resource designated by the Resource Allocation (TB#1) may be regarded as being used for scheduling TB#2.

(4) Operation example

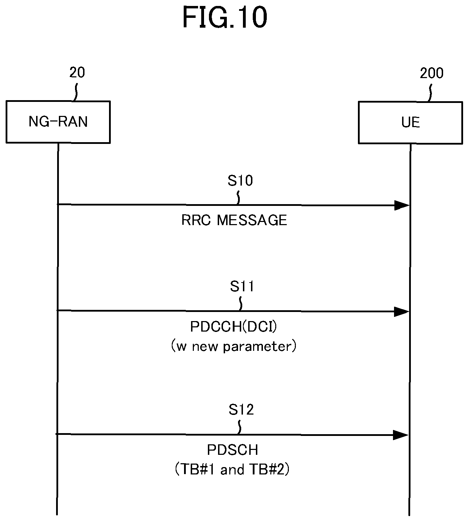

As illustrated in FIG. 10, in step S10, the UE 100 receives an RRC message. The RRC message may include an information element (such as, for example, BandwidtPart-Config, RA Type, pdsch-TimeDomainAllocationList, and MCS table) required for interpreting the information element included in the DCI.

In step S11, the UE 100 receives a DCI via a PDCCH. The DCI is a DCI used for the predetermined communication (for example, see FIG. 7 or FIG. 9) and includes a new information element (such as, for example, LGS-Multi-TB Flag, MCS (TB#2) or Delta-MCS).

In step S12, the UE 100 receives TB#1 and TB#2 via the PDSCH based on the DCI used for the predetermined communication. The frequencies at which TB#1 and TB#2 are scheduled are different from each other, and the MCSs of TB#1 and TB#2 may be different from each other.

(5) Advantageous effects

According to the embodiment, in a case where the LSG is set and the channel bandwidth scheduled with the DCI is expected to be larger than the channel coherent bandwidth, the UE 200 performs the predetermined communication for transmitting two or more TBs using frequency division multiplexing in the channel bandwidth. With such a configuration, different MCSs can be applied to two or more TBs, whereby degradation of the reception characteristics of the TBs can be suppressed.

[First modification]

Hereinafter, a first modification of the embodiment will be described. Differences from the embodiment will be described below.

In the embodiment, the case where the DCI used for the predetermined communication is expanded, that is, a case where a new information element (such as, for example, LGS-Multi-TB Flag, MCS (TB#2), or Delta-MCS) is added to the DCI is described. On the other hand, in the first modification, a case is described where the interpretation of the DCI is changed instead of adding a new information element to the DCI.

In the first modification, the UE 200 changes the interpretation of one DCI when the application of the predetermined communication is designated by an upper layer parameter. The upper layer parameter may be set with RRC or configured with MAC CE. Changing the interpretation means applying a new interpretation different from an existing one.

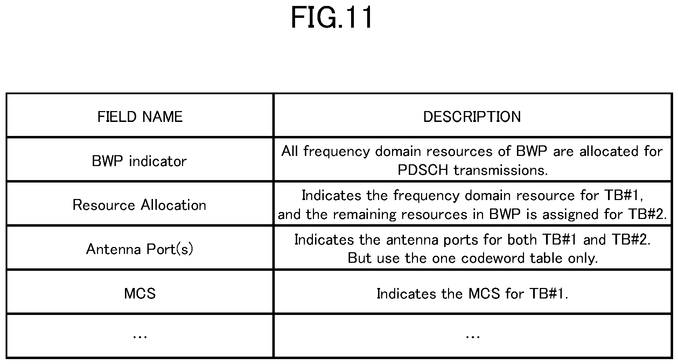

Specifically, when the predetermined communication is applied, the existing information element included in the DCI may be interpreted as illustrated in FIG. 11.

As illustrated in FIG. 11, the DCI includes existing information elements such as BWP Indicator, Resource Allocation, Antenna Port(s), and MCS (TB#1). The DCI may include other existing information elements (such as HPN, NDI, or RV).

The BWP Indicator may be interpreted to indicate that all frequency domain resources included in the BWP are used for PDSCH transmission. The Resource Allocation may be interpreted to indicate the frequency domain resource to be used for TB#1 and that remaining frequency domain resources not designated are to be used for TB#2. The Antenna Port(s) may be interpreted to indicate the antenna ports used for both TB#1 and TB#2. The Antenna Port(s) may be interpreted to indicate that the same codeword table is used. The MCS may be interpreted as an information element that designates the MCS of TB#1.

Although the BWP Indicator is illustrated in FIG. 11, the BWP Indicator is optional. For example, the first modification is applicable to the DCI format that does not include the BWP Indicator.

The first modification involves no expansion of the DCI, and thus involves no information element designating the MCS of TB#2. Thus, the MCS of TB#2 may be interpreted according to a specific rule as follows.

(1) First interpretation example

In a first interpretation example, a case is described where the MCS of TB#2 is interpreted based on a difference from the MCS of TB#1, when the predetermined communication is set by an upper layer parameter.

Specifically, the MCS of TB#2 may be changed by a predetermined number of MCS levels, with respect to the MCS of TB#1. The predetermined number of MCS levels may be designated by the upper layer parameter. The upper layer parameter may be set with RRC or configured with MAC CE. For example, the MCS of TB#2 may be interpreted as an MCS of a level set to be lower than the MCS of TB#1 by the predetermined number of levels, or an MCS of a level set to be higher than the MCS of TB#1 by the predetermined number of levels.

(2) Second interpretation example

In a second interpretation example, a case is described where the MCS of TB#2 is derived from the CQI when the predetermined communication is set by the upper layer parameter.

Specifically, under the assumption that the MCS of TB#2 may be set by the CQI included in a latest CQI report, the MCS of TB#2 may be derived from the CQI included in the latest CQI report. For example, when the UE 200 reports CQI#1 and CQI#2 as wideband CQIs, the MCS of TB#2 may be derived based on a difference between CQI#1 and CQI#2. The report interval between CQI#1 and CQI#2 may include a predetermined number of slots as a guard time interval.

(3) Third interpretation example

In a third interpretation example, a case is described where an information element designating two or more MCSs may be stored in the existing MCS field included in the DCI. In such a case, the RRC message (for example, PDSCH-Config) includes maxNrofCode-WordsScheduledByDCI indicating the number of codewords that can be scheduled with a single DCI. For example, when the existing maxNrofCodeWordsScheduledByDCI is 1, an information element that designates one MCS is stored in the MCS field, and when the existing maxNrofCodeWordsScheduledByDCI is 2, an information element that designates two MCS is stored in the MCS field.

Specifically, in a case where the predetermined communication is set by the upper layer parameter, the information element that identifies two MCSs may be stored in the MCS field even when the maxNrofCodeWordsScheduledByDCI is 1. In such a case, one MCS is applied to TB#1 and the other MCS is applied to TB#2.

In the case where the predetermined communication is set by the upper layer parameter, the maxNrofCodeWordsScheduledByDCI may not be expected to be 2.

Alternatively, in the case where the predetermined communication is set by the upper layer parameter with the maxNrofCodeWordsScheduledByDCI being 2, the information element included in the MCS field may be used in a conventional manner. Thus, the information element included in the MCS field may be used for receiving two codewords.

Alternatively, in the case where the predetermined communication is set by the upper layer parameter with the maxNrofCodeWordsScheduledByDCI being 2, the MSC of TB#2 may be identified in a way similar to that in the first and the second interpretation examples. Furthermore, the expanded DCI can be used as in the embodiment.

(4) Operation example

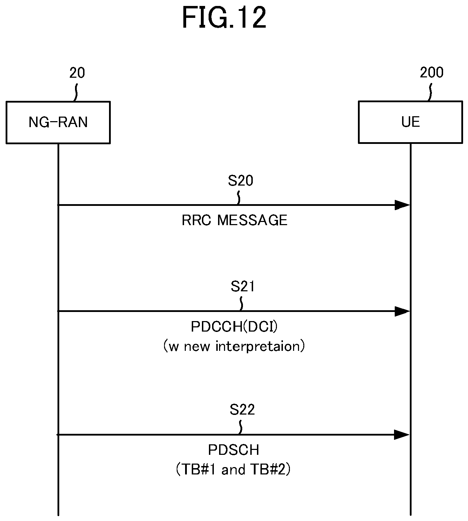

As illustrated in FIG. 12, in step S20, the UE 100 receives an RRC message. The RRC message may include an information element (such as, for example, BandwidtPart-Config, RA Type, pdsch-TimeDomainAllocationList, and MCS table) required for interpreting the information element included in the DCI. In the first modification, the RRC message includes an information element indicating whether the predetermined communication is applied. Such an information element may be the above-mentioned LGS-Multi-TB Flag.

In step S21, the UE 100 receives a DCI via a PDCCH. The UE 100 changes the interpretation of one DCI as described above because the application of the predetermined communication is designated by an upper layer parameter.

In step S22, the UE 100 receives TB#1 and TB#2 via the PDSCH based on the DCI used for the predetermined communication. The frequencies at which TB#1 and TB#2 are scheduled are different from each other, and the MCSs of TB#1 and TB#2 may be different from each other.

[Second modification]

Hereinafter, a second modification of the embodiment will be described. Differences from the embodiment will be described below.

The embodiment has described the case where a single DCI common to two or more TBs is received as the DCI used for the predetermined communication. On the other hand, in the second modification, a UE 200 receives multiple DCIs respectively corresponding to two or more TBs as DCIs used for the predetermined communication.

Specifically, assuming that two TBs (TB#1 and TB#2) are frequency division multiplexed, the UE 200 monitors both of DCI#1 used for TB#1 and DCI#2 used for TB#2 as in the case of existing multiple-Transmission Reception Point (TRP) transmission, and receives DCI#1 and DCI#2. The UE 200 controls the communications for TB#1 based on DCI#1, and controls the communications for TB#2 based on DCI#2. Thus, the UE 200 may receive two DCIs by spatial multiplexing and receive two TBs by frequency division multiplexing based on the two DCIs.

[Third modification]

Hereinafter, a third modification of the embodiment will be described. Differences from the embodiment will be described below.

In the embodiment, the MCS related to TB#2 has been mainly described. On the other hand, in the third modification, other information elements related to TB#2 (for example, HPN, NDI, and RV) will be described.

(1) Configuration example 1

The DCI may newly include fields for storing other information elements (for example, HPN, NDI, and RV) related to TB#2, as in the case of MCS in the embodiment. The HPN field length of TB#2 may be the same as the existing HPN field length (up to 4 bits). The NDI field length of TB#2 may be the same as the existing NDI field length (1 bit). The RV field length of TB#2 may be the same as the existing RV field length (2 bits).

(2) Configuration example 2

When the predetermined communication is set by the upper layer parameter, other information elements related to TB#2 (for example, HPN, NDI, and RV) may be interpreted based on a designating rule as follows, without the need for changing the existing DCI. Still, configuration example 2 is applied to the case where TB#1 and TB#2 are the same TB.

Regarding the HPN designated by the DCI, the same value may be applied to both TB#1 and TB#2.

The value of the NDI designated by the DCI may be a value indicating initial transmission when TB#1 and TB#2 are transmitted for the first time, and may be a value indicating retransmission when TB#1 and TB#2 are retransmitted. In other words, the NDI may be changed (toggled) when TB#1 and TB#2 are transmitted for the first time, and the NDI may not be changed (not toggled) when TB#1 and TB#2 are retransmitted.

The RV designated by the DCI may be applied to TB#1, and the RV of TB#2 may be determined as follows. For example, the RV of TB#2 may be a value obtained by adding 1 to the RV of TB#1. Alternatively, for the RV of TB#2, an application rule (for example, RV0 > RV2 > RV3 > RV1) may be defined based on the RV of TB#1. For example, when the RV of TB#1 is RV0, the RV of TB#2 may be interpreted as RV2. Alternatively, the RV of TB#2 may be the same as the RV of TB#1. Alternatively, the RV of TB#1 may be determined by 1 bit in the RV of 2 bits and the RV of TB#2 may be determined by the remaining 1 bit. In such a case, the types of RV that can be used in the predetermined communication may be limited to two types (for example, RV0 and RV2).

In these cases, when two information elements are stored in the existing HPN field, the UE 200 may ignore information elements other than the information elements applied to TB#1, and designate the HPN of TB#2 based on the above-mentioned designation rule. Similarly, when two information elements are stored in the existing NDI field, the UE 200 may ignore information elements other than the information elements applied to TB#1, and designate the NDI (and/or RV) of TB#2 based on the above-mentioned designation rule.

(3) Configuration example 3

When the predetermined communication is set by the upper layer parameter, other information elements related to TB#2 (for example, HPN, NDI, and RV) may be interpreted based on a designating rule as follows, without the need for changing the existing DCI. Still, configuration example 3 is applied to the case where TB#1 and TB#2 are different TBs.

Regarding the HPN designated by the DCI, the same value may be applied to both TB#1 and TB#2.

The value of the NDI specified by the DCI may be a value indicating initial transmission when both of TB#1 and TB#2 are transmitted for the first time, and may be a value indicating retransmission when any one of TB#1 and TB#2 are retransmitted. In other words, the NDI may be changed (toggled) when both of TB#1 and TB#2 are transmitted for the first time, and the NDI may not be changed (not toggled) when any one of TB#1 and TB#2 are retransmitted. When the NDI indicates retransmission, the TB that is transmitted for the first time and the TB that is retransmitted are associated with the same HPN.

The RV designated by the DCI may be applied to TB#1, and the RV of TB#2 may be determined as follows. For example, the RV of TB#1 may be determined by 1 bit in the RV of 2 bits and the RV of TB#2 may be determined by the remaining 1 bit. In such a case, the types of RV that can be used in the predetermined communication may be limited to two types (for example, RV0 and RV2).

In these cases, when two information elements are stored in the existing HPN field, the UE 200 may ignore information elements other than the information elements applied to TB#1, and designate the HPN of TB#2 based on the above-mentioned designation rule. Similarly, when two information elements are stored in the existing NDI field, the UE 200 may ignore information elements other than the information elements applied to TB#1, and designate the NDI (and/or RV) of TB#2 based on the above-mentioned designation rule.

[Other embodiments]

Although the content of the present invention has been described above with reference to the embodiments, the present invention is not limited to these descriptions, and it is obvious to those skilled in the art that various modifications and improvements can be made.

In the embodiment, the case has been described where the UE 200 receives two or more TBs in the downlink as the predetermined communication. However, the embodiment is not limited to this. The embodiment is also applicable to the case where the UE 200 transmits two or more TBs in the uplink. In such a case, the PDSCH may be simply replaced by PUSCH.

The block diagram used for explaining the embodiments (FIG. 4) illustrates blocks of functional unit. Those functional blocks (structural components) can be realized by a desired combination of at least one of hardware and software. A method for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (structural component) that causes transmitting may be called a transmitting unit or a transmitter. For any of the above, as explained above, the realization method is not particularly limited to any one method.

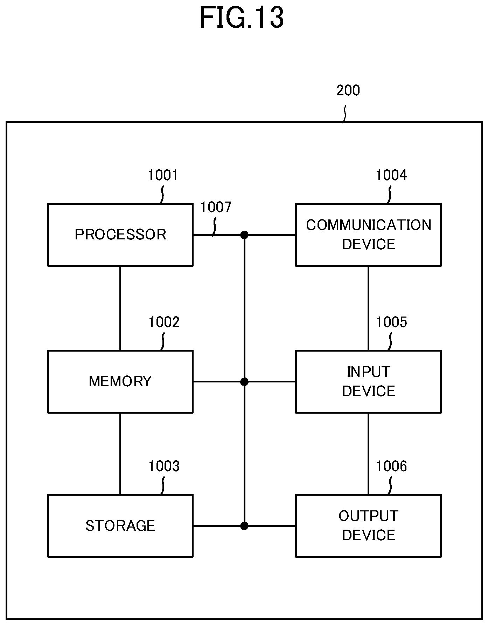

Furthermore, the UE 200 (the device) explained above can function as a computer that performs the processing of the radio communication method of the present disclosure. FIG. 13 is a diagram illustrating an example of a hardware configuration of the device. As illustrated in FIG. 13, the device can be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. Hardware configuration of the device can be constituted by including one or plurality of the devices illustrated in the figure, or can be constituted by without including a part of the devices.

The functional blocks (see FIG. 4) of the device can be realized by any of hardware elements of the computer device or a desired combination of the hardware elements.

Moreover, the processor 1001 performs computing by loading a predetermined software (computer program) on hardware such as the processor 1001 and the memory 1002, and realizes various functions of the device by controlling communication via the communication device 1004, and controlling reading and/or writing of data on the memory 1002 and the storage 1003.

The processor 1001, for example, operates an operating system to control the entire computer. The processor 1001 can be configured with a central processing unit (CPU) including an interface with a peripheral device, a control device, a computing device, a register, and the like.

Moreover, the processor 1001 reads a computer program (computer program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 can be called register, cache, main memory (main storage device), and the like. The memory 1002 can store therein a computer program (computer program codes), software modules, and the like that can execute the method according to the embodiment of the present disclosure.

The storage 1003 is a computer readable recording medium. Examples of the storage 1003 include an optical disk such as Compact Disc ROM (CD-ROM), a hard disk drive, a flexible disk, a magnetooptical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 may include a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information thereamong. The bus 1007 can be constituted by a single bus or can be constituted by separate buses between the devices.

Further, the device may be configured to include hardware such as a microprocessor, a digital signal processor (Digital Signal Processor: DSP), Application Specific Integrated Circuit (ASIC), Programmable Logic Device (PLD), and Field Programmable Gate Array (FPGA). Some or all of these functional blocks may be realized by the hardware. For example, the processor 1001 may be implemented by using at least one of these hardware.

Notification of information is not limited to that explained in the above aspect/embodiment of the present disclosure, and may be performed by using a different method. For example, the notification of information may be performed by physical layer signaling (for example, Downlink Control Information (DCI), Uplink Control Information (UCI), upper layer signaling (for example, RRC signaling, Medium Access Control (MAC) signaling, notification information (Master Information Block (MIB), System Information Block (SIB)), other signals, or a combination of these. The RRC signaling may be called RRC message, for example, or can be RRC Connection Setup message, RRC Connection Reconfiguration message, or the like.

Each of the aspects/embodiments described in the present disclosure can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the above aspects/embodiments in the present disclosure may be exchanged. For example, the various steps and the sequence of the steps of the methods explained in the present disclosure are exemplary and are not limited to the specific order mentioned above.

The specific operation that is performed by the base station in the present disclosure may be performed by its upper node in some cases. In a network constituted by one or more network nodes having a base station, the various operations performed for communication with the terminal may be obviously performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information and signals (information and the like) can be output from an upper layer (or lower layer) to a lower layer (or upper layer). It may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, computer program code, computer program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, optical fiber cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned in the present disclosure may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of a channel and a symbol may be a signal (signaling). Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and/or a base station subsystem that performs communication service in this coverage.

In the present disclosure, the terms "mobile station (Mobile Station: MS)", "user terminal", "user equipment (User Equipment: UE)", "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), or a robot (manned type or unmanned type). At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter the same). For example, each of the aspects/embodiments of the present disclosure may be applied to a configuration that allows a communication between a base station and a mobile station to be replaced with a communication between a plurality of mobile stations (for example, may be referred to as Device-to-Device (D2D), Vehicle-to-Everything (V2X), or the like). In this case, the mobile station may have the function of the base station. Words such as "uplink" and "downlink" may also be replaced with words corresponding to inter-terminal communication (for example, "side"). For example, terms an uplink channel, a downlink channel, or the like may be read as a side channel.

Likewise, a mobile station in the present disclosure may be read as a base station. In this case, the base station may have the function of the mobile station.

A radio frame may include one or more frames in the time domain. Each of one or more frames in the time domain may be referred to as a subframe.

Furthermore, a subframe may include one or multiple slots in the time domain. A subframe may be a fixed time duration (for example, 1 ms) not dependent on the numerology.

The numerology may be a communication parameter applied to at least one of transmission and reception of a certain signal or channel. For example, the numerology may indicate at least one of subcarrier spacing (SCS), bandwidth, symbol length, cyclic prefix length, transmission time interval (TTI), the number of symbols per TTI, radio frame configuration, a specific filtering process performed by a transceiver in the frequency domain, and a specific windowing process performed by the transceiver in the time domain, and the like.

A slot may include one or more symbols in the time domain (orthogonal frequency division multiplexing (OFDM)) symbols, single carrier frequency division multiple access (SC-FDMA) symbols, and so on). Also, a slot may be a time unit based on the numerology.

A slot may include a plurality of minislots. Each minislot may include one or more symbols in the time domain. Also, a minislot may be referred to as a subslot. Minislots may be composed of fewer symbols than slots. PDSCH (or PUSCH) transmitted in a time unit larger than a minislot may be referred to as PDSCH (or PUSCH) mapping type A. PDSCH (or PUSCH) transmitted using a minislot may be referred to as PDSCH (or PUSCH) mapping type B.

A radio frame, a subframe, a slot, a minislot, and a symbol all represent a time unit in signal communication. A radio frame, a subframe, a slot, a minislot, and a symbol may be each called by other applicable names.

For example, one subframe may be referred to as a transmission time interval (TTI), or a plurality of consecutive subframes may be referred to as a TTI, or one slot or minislot may be referred to as a TTI. That is, at least one of a subframe and a TTI may be a subframe (1 ms) in the existing LTE, may be a shorter period of time than 1 ms (for example, one to thirteen symbols), or may be a longer period of time than 1 ms. Note that the unit to represent a TTI may be referred to as a slot, a minislot, and so on, instead of a subframe.

Here, a TTI refers to the minimum time unit of scheduling in radio communication, for example. For example, in LTE systems, a base station schedules the radio resources (such as the frequency bandwidth and transmission power that can be used in each user terminal) to allocate to each user terminal in TTI units. Note that the definition of TTIs is not limited to this.

The TTI may be a transmission time unit of channel-encoded data packets (transport blocks), code blocks, codewords, or the like, or may be a unit of processing in scheduling, link adaptation, and so on. Note that, when a TTI is given, the period of time (for example, the number of symbols) in which transport blocks, code blocks, codewords, or the like are actually mapped may be shorter than the TTI.

Note that, when one slot or one minislot is referred to as a TTI, one or more TTIs (that is, one or more slots or one or more minislots) may be the minimum time unit of scheduling. Also, the number of slots (the number of minislots) to constitute this minimum time unit of scheduling may be controlled.

A TTI having a time duration of 1 ms may be referred to as a general TTI (TTI in LTE Rel. 8 to 12), a normal TTI, a long TTI, a general subframe, a normal subframe, a long subframe, a slot, and so on. A TTI that is shorter than a general TTI may be referred to as a shortened TTI, a short TTI, a partial TTI (or a fractional TTI), a shortened subframe, a short subframe, a minislot, a subslot, a slot, and so on.

Note that a long TTI (for example, a general TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or a plurality of consecutive subcarriers in the frequency domain. The number of subcarriers included in the RB may be the same regardless of the numerology, and may be, for example, 12. The number of subcarriers included in the RB may be determined based on the numerology.

Also, the time domain of the RB may include one or more symbols, and may be one slot, one minislot, one subframe, or one TTI in length. One TTI, one subframe, and the like may each include one or more resource blocks.

Note that one or more RBs may be referred to as a physical resource block (physical RB (PRB)), a subcarrier group (SCG), a resource element group (REG), a PRB pair, an RB pair, and so on.

Furthermore, a resource block may include one or more resource elements (REs). For example, one RE may be a radio resource field of one subcarrier and one symbol.

A bandwidth part (BWP) (which may be referred to as a partial bandwidth, or the like) may represent a subset of contiguous common resource blocks (common RBs) for a certain numerology in a certain carrier. Here, the common RBs may be specified by an RB index based on a common reference point of the carrier. A PRB may be defined in a BWP and numbered within the BWP.

The BWP may include a BWP for UL (UL BWP) and a BWP for DL (DL BWP). For a UE, one or more BWPs may be set within one carrier.

At least one of the configured BWPs may be active and the UE may not expect to send or receive any given signal/channel outside the active BWP. Note that "cell", "carrier", and the like in the present disclosure may be replaced with a "BWP".

Note that the structures of radio frames, subframes, slots, minislots, symbols, and so on described above are merely examples. For example, configurations pertaining to the number of subframes included in a radio frame, the number of slots per subframe or radio frame, the number of minislots included in a slot, the number of symbols and RBs included in a slot or a minislot, the number of subcarriers included in an RB, the number of symbols in a TTI, the symbol duration, the length of cyclic prefixes (CPs), and so on can be variously changed.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables, printed electrical connections, and as some non-limiting and non-exhaustive examples, by using electromagnetic energy having wavelengths in the radio frequency domain, the microwave domain and light (both visible and invisible) domains, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

The "means" in the configuration of each of the above devices may be replaced with "unit", "circuit", "device", and the like.

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout this disclosure, for example, during translation, if articles such as "a", "an", and "the" in English are added, in this disclosure, these articles shall include plurality of nouns following these articles.

The term "determining" as used in this disclosure may encompass a wide variety of operations. Examples of "determining" may include cases where judging, calculating, computing, processing, deriving, investigating, looking up, search, inquiry (e.g., searching a table, a database, or another data structure), and ascertaining are considered to be "determined". Furthermore, "determining" may include cases where receiving (for example, receiving information), transmitting (for example, transmitting information), input, output, and accessing (for example, accessing data in a memory) are considered to be "determined". In addition, "determining" may include cases where resolving, selecting, choosing, establishing, and comparing are considered to be "determined". In other words, "determining" may include cases where of some operation is considered to be "determined". The term "determining" may be replaced with "assuming", "expecting", "considering", or the like.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

Reference Signs List

    10 Radio communication system
    20 NG-RAN
    100 gNB
    200 UE
    210 Radio signal transmission/reception unit
    220 Amplifier unit
    230 Modulation/demodulation unit
    240 Control signal/reference signal processing unit
    250 Coding/decoding unit
    260 Data transmission/reception unit
    270 Control unit
    1001 Processor
    1002 Memory
    1003 Storage
    1004 Communication device
    1005 Input device

1006Output device
1007 Bus

**Claims**

1. A terminal comprising:

   a control unit configured to control predetermined communication, which uses a same antenna port, for transmitting two or more transport blocks by using frequency division multiplexing; and
   a reception unit configured to receive downlink control information used for the predetermined communication, wherein
   the control unit controls the predetermined communication based on the downlink control information.

2. The terminal according to claim 1, wherein
   the communication unit receives, as the downlink control information used for the predetermined communication, multiple downlink control information respectively corresponding to the two or more transport blocks.

3. The terminal according to claim 1, wherein
   the communication unit receives, as the downlink control information used for the predetermined communication, single downlink control information common to the two or more transport blocks.

4. The terminal according to claim 3, wherein
   the single downlink control information includes, in addiction to an information element used for a first transport block included in the two or more transport blocks, any one or more of an information element indicating whether the predetermined communication is applied, an information element indicating a channel bandwidth used for the predetermined communication, and an information element used for a second transport block other than the first transport block.

5. The terminal according to claim 3, wherein
   the control unit changes interpretation of the single downlink control information, when the predetermined communication is designated to be applied by an upper layer parameter.

# FIG.1

# FIG.2

EP 4 142 389 A1

FIG.3

FIG.4

# FIG.5

# FIG.6

CC BANDWIDTH

| BWP#0 | BWP#1 | BWP#2 | BWP#3 |
|-------|-------|-------|-------|

Frequency

| TB#1 | TB#1 | TB#2 | TB#2 | TB#1 | TB#1 | TB#1 | TB#2 |
|------|------|------|------|------|------|------|------|

# FIG.7

| FIELD NAME | DESCRIPTION |
|------------|-------------|
| LGS-Multi-TB Flag | Indicate LGS and Multi-TB simultaneously or separately |
| BWP indicator | Same length as current field in DCI |
| Resource Allocation (TB#1) | Same length as resource allocation field in DCI |
| MCS (TB#1) | Indicate MCS for TB#1, same length as current DCI. |
| MCS (TB#2) or Delta-MCS | Indicate MCS for TB#2, same length as MCS for TB#1 or shorter length for Delta-MCS |
| ... | ... |

# FIG.8

CC BANDWIDTH

| FD RD Group#0 | FD RD Group#1 | FD RD Group#2 | FD RD Group#3 |
|---|---|---|---|

Frequency

| TB#1 | TB#1 | TB#2 | TB#2 | TB#1 | TB#1 | TB#1 | TB#2 |
|---|---|---|---|---|---|---|---|

# FIG.9

| FIELD NAME | DESCRIPTION |
|---|---|
| LGS-Multi-TB Flag | Indicate LGS and Multi-TB simultaneously or separately |
| FD RB Group Allocation | Indicate resource block grouup |
| Resource Allocation (TB#1) | Same length as resource allocation field in DCI |
| MCS (TB#1) | Indicate MCS for TB#1, same length as current DCI. |
| MCS (TB#2) or Delta-MCS | Indicate MCS for TB#2, same length as MCS for TB#1 or shorter length for Delta-MCS |
| ... | ... |

# FIG.10

# FIG.11

| FIELD NAME | DESCRIPTION |
|---|---|
| BWP indicator | All frequency domain resources of BWP are allocated for PDSCH transmissions. |
| Resource Allocation | Indicates the frequency domain resource for TB#1, and the remaining resources in BWP is assigned for TB#2. |
| Antenna Port(s) | Indicates the antenna ports for both TB#1 and TB#2. But use the one codeword table only. |
| MCS | Indicates the MCS for TB#1. |
| ... | ... |

# FIG.12

20 NG-RAN

200 UE

S20
RRC MESSAGE

S21
PDCCH(DCI)
(w new interpretaion)

S22
PDSCH
(TB#1 and TB#2)

# FIG.13

200

1001

1007

PROCESSOR

1004

COMMUNICATION
DEVICE

1002

MEMORY

1005

INPUT
DEVICE

1003

STORAGE

1006

OUTPUT
DEVICE

## INTERNATIONAL SEARCH REPORT

International application No.

PCT/JP2020/017408

### A. CLASSIFICATION OF SUBJECT MATTER
H04W 72/04(2009.01)i
FI: H04W72/04 132; H04W72/04 136

According to International Patent Classification (IPC) or to both national classification and IPC

### B. FIELDS SEARCHED

Minimum documentation searched (classification system followed by classification symbols)
H04B7/24-7/26; H04W4/00-99/00

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | MOTOROLA MOBILITY, "Corrections to Additional enhancements for NB-IoT", 3GPP TSG RAN WG1 #100_e R1-2001434[online], 06 March 2020 [retrieval date 11 November 2020], Internet<URL:https://www.3gpp.org/ftp/tsg_ran/WG1_RL1/TSGR1_100_e/Docs/R1-2001434.zip>, pp. 1-13 in particular, section 16.4.1 | 1, 5 |
| Y | in particular, section 16.4.1 | 2-3 |
| A | | 4 |
| Y | INTEL CORPORATION, "Discussion on multi-TRP/multi-panel transmission", 3GPP TSG RAN WG1 #94b R1-1810790[online], 12 October 2018 [retrieval date 11 November 2020], Internet<URL:http://www.3gpp.org/ftp/tsg_ran/WG1_RL1/TSGR1_94b/Docs/R1-1810790.zip> in particular, pp. 4-5 | 2 |

☒ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 November 2020 (11.11.2020) | 24 November 2020 (24.11.2020) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2020/017408

C (Continuation).    DOCUMENTS CONSIDERED TO BE RELEVANT

| Category* | Citation of document, with indication, where appropriate, of the relevant passages | Relevant to claim No. |
|---|---|---|
| Y | ZTE CORPORATION, "Discussion on LTE Rel-16 UE Features for NB-IoT", 3GPP TSG RAN WG1 #100b_e R1-2001858[online], 10 April 2020 [retrieval date 11 November 2020], Internet<URL:https://www.3gpp.org/ftp/tsg_ran/WG1_RL1/TSGR1_100b_e/Docs/R1-2001858.zip> in particular, section 2.1 | 3 |
| A | LG ELECTRONICS, "Discussion on multiple transport blocks scheduling in MTG", 3GPP TSG RAN WG1 #98 R1-1908521[online], 30 August 2019 [retrieval date 11 November 2020], Internet<URL:https://www.3gpp.org/ftp/tsg_ran/WG1_RL1/TSGR1_98/Docs/R1-1908521.zip> entire text | 1-5 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 1410

- FR 22425

**Non-patent literature cited in the description**

- New WID on Extending current NR operation to 71 GHz. *RP-193229, 3GPP TSG RAN Meeting #86, 3GPP,* December 2019